# EUROPÄISCHE PATENTSCHRIFT

(11) **EP 4 097 430 B1**
(45) Veröffentlichungstag und Bekanntmachung des Hinweises auf die Patenterteilung: **10.01.2024**
(21) Anmeldenummer: 20839304.1
(22) Anmeldetag: 21.12.2020
(51) Int. Cl.: G01M 5/00

(54) **FAHRWERKBAUTEIL FÜR EIN KRAFTFAHRZEUG**
RUNNING GEAR COMPONENT FOR A VEHICLE
COMPOSANT DE TRAIN ROULANT POUR UN VEHICULE

(30) Priorität: 31.01.2020 DE 102020201199
(43) Veröffentlichungstag der Anmeldung: 07.12.2022
(73) Patentinhaber: ZF Friedrichshafen AG, 88046 Friedrichshafen (DE)
(72) Erfinder: MÜLLER, Ingolf, 76872 Minfeld (DE); STIEGLITZ, Andre, 49086 Osnabrück (DE); JUNG, Frank, 27232 Sulingen (DE); WERRIES, Christoph, 49143 Bissendorf (DE)
(74) Vertreter: ZF Friedrichshafen AG
(86) Internationale Anmeldenummer: PCT/EP2020/087381
(87) Internationale Veröffentlichungsnummer: WO 2021/151592

(56) Entgegenhaltungen:
- DE-A1- 10 153 970
- DE-A1-102011 089 605
- DE-A1-102016 224 719

## Beschreibung

Die Erfindung betrifft ein Fahrwerkbauteil für ein Kraftfahrzeug, an dem zumindest ein Sensor zur Detektion einer mechanischen Belastung angeordnet ist.

Vielfach ist es üblich, Fahrwerkbauteile an Kraftfahrzeugen während ihrer Lebensdauer nur im Rahmen von nach festem Fristenplan durchgeführten Wartungen zu überwachen und gegebenenfalls auszutauschen oder zu reparieren. Dies führt dazu, dass Strukturen häufig überdimensioniert werden müssen, um ein sehr langsames Degradationsverhalten einzustellen, um für Dauer der Wartungsintervalle die Funktionssicherheit des Fahrwerkbauteils zu gewährleisten.

Eine weitere Überbemessung findet in Folge der Absicherung gegen sogenannte Missbrauchsszenarien statt. Ein solches Missbrauchsszenario ist beispielsweise der Ansatz eines Wagenhebers an einem Fahrwerkbauteil mit dem daraus resultierenden Lastfall einer Biegebelastung. Bei einer Achsstrebe als sicherheitsrelevantem Fahrwerkbauteil kann dies zu einer erheblichen Schädigung und zu einem unsicheren Weiterbetrieb der Struktur führen.

Insbesondere in der Faserverbundbauweise für ein Fahrwerkbauteil ist eine konstruktive Lösung für die Berücksichtigung dieses Missbrauchsszenarios mit einer erheblichen Zusatzmasse und entsprechenden Mehrkosten für das Fahrwerkbauteil verbunden. Darüber hinaus ist die Zusatzmasse eine unerwünschte Auswirkung der Überbemessung, da durch die Ausführung des Fahrwerkbauteils in Faserverbundbauweise gegenüber der Verwendung von Metall gerade eine Gewichtsreduktion erreicht werden soll.

Aus der DE 101 53 970 A1 ist ein faserverstärktes Fahrwerkbauteil für ein Kraftfahrzeug bekannt. Das Fahrwerkbauteil besteht aus faserverstärkten Kunststoffen oder Kunststoffverbundsystemen. In den Kunststoffanteil des Fahrwerkbauteils ist ein Sensor zur Messung von an dem Fahrwerkbauteil auftretenden Belastungen integriert. Der Sensor ist hierfür als Dehnungsmessstreifen, als Piezoelement oder als ein Beschleunigungssensor ausgebildet.

Die DE 10 2016 224 719 A1 beschreibt ein faserverstärktes Fahrwerkbauteil für ein Kraftfahrzeug, an welchem ein sogenannter Missbrauchssensor an der Außenseite des Fahrwerkbauteils angeordnet ist. Der Missbrauchssensor ist als piezoresistiver Kraftsensor ausgebildet und dient der Messung von an dem Fahrwerkbauteil auftretenden Biegebelastungen.

Die DE 10 2011 089605 A1 beschreibt ebenfalls ein Fahrwerkbauteil für ein Kraftfahrzeug.

Ausgehend von dem vorstehend beschriebenen Stand der Technik ist es nun die Aufgabe der vorliegenden Erfindung, ein Fahrwerkbauteil für ein Kraftfahrzeug, an dem zumindest ein Sensor zur Detektion einer mechanischen Belastung angeordnet ist, weiterzubilden, wobei der zumindest eine Sensor kostengünstiger ist.

Diese Aufgabe wird aus vorrichtungstechnischer Sicht ausgehend vom Oberbegriff des Anspruchs 1 in Verbindung mit dessen kennzeichnenden Merkmalen gelöst. Die hierauf folgenden abhängigen Ansprüche geben jeweils vorteilhafte Weiterbildungen der Erfindung wieder.

Gemäß der Erfindung wird ein Fahrwerkbauteil für ein Kraftfahrzeug vorgeschlagen, an dem zumindest ein Sensor zur Detektion einer mechanischen Belastung angeordnet ist, wobei der zumindest eine Sensor als ein Schalter einer elektrischen Schaltung ausgeführt ist, mit zumindest einem Lasteinleitungselement und zumindest zwei Schaltelementen, wobei das Lasteinleitungselement eine höhere Steifigkeit als die zumindest zwei Schaltelemente aufweist, wobei eine Überschreitung eines Belastungsgrenzwertes durch eine von dem zumindest einen Lasteinleitungselement über das Fahrwerkbauteil aufgenommene Biegebelastung eine Änderung einer Schaltstellung der zumindest zwei elastischeren Schaltelemente bewirkt. Eine auftretende Biegebelastung an dem Fahrwerkbauteil führt, in Abhängigkeit von deren Größenordnung, zu dessen Verformung, welche von dem Lasteinleitungselement aufgenommen wird. Es findet also eine Übersetzung der Verformung des Fahrwerkbauteils in eine, insbesondere größere, Verformung wenigstens eines der Schaltelemente statt, die zu einer Änderung der Schaltstellung führt. Die auf das Lasteinleitungselement übertragene Verformung bewirkt bei Überschreitung des Belastungsgrenzwertes die Änderung der Schaltstellung der zumindest zwei Schaltelemente zueinander. Dabei wird die Schaltstellung der zumindest zwei Schaltelemente ausgehend von einer geöffneten Schaltstellung in eine geschlossene Schaltstellung überführt oder umgekehrt. Ob ein Schließen oder Öffnen bei einem Auftreten einer kritischen Biegebelastung eingestellt wird, kann je nach Auslegung der Schaltung vorgegeben werden. Die Änderung der Schaltstellung aufgrund der Biegebelastung wird detektiert und ausgewertet. Gegenüber den aus dem Stand der Technik bekannten Sensoren ist der erfindungsgemäße Schalter einfacher herzustellen und somit kostengünstiger. Das Fahrwerkbauteil kann aus einem Faserverbundwerkstoff oder einem metallischen Werkstoff bestehen. Das aus einem Faserverbundwerkstoff bestehende Fahrwerkbauteil kann beispielsweise als ein im Pultrusionsverfahren oder im Spritzguss hergestelltes Bauteil ausgeführt sein. Zur Herstellung des Fahrwerkbauteils kommt insbesondere in Abhängigkeit vom verwendeten Material ein entsprechend geeignetes Herstellverfahren zur Anwendung. Der Schalter ermöglicht es auf einfache Weise, den Eintritt eines Missbrauchslastfalles oder das Auftreten einer Überlast an dem Fahrwerkbauteil durch ein autonomes mechatronisches System zu detektieren und anschließend auf Fahrzeugebene weitere Aktionen abzuleiten, beispielsweise das Aktivieren einer Warnleuchte, die Unterbrechung des Fahrzeugbetriebes, das Vornehmen eines Logbuch-Eintrag. Bei einer Ereignisdetektion einer Überlast kann beispielsweise mittels einfacher LED-Signalleuchten im Instrumentenbereich des Fahrzeuges eine zu hohe Last / Missbrauchslast signalisiert werden. Darüber hinaus kann durch ein Steuergerät eine Auswertung stattfinden. So kann in dem Steuergerät beispielsweise eine Zählschleife hinterlegt werden, welche die Anzahl der Lastüberschreitungen im Sinne eines Lebensdauerzählers detektiert um dann gegebenenfalls bei Überschreiten eines Zählerschwellwertes eine Weiterfahrt zu unterbinden.

Insbesondere kann die Schaltung eine Stromquelle umfassen, die als externe Stromquelle oder als eine in das Fahrwerkbauteil integrierte Stromquelle ausgeführt ist. Insbesondere bei einer in das Fahrwerkbauteil integrierten Stromquelle kann diese als sogenanntes Energy Harvesting Modul ausgeführt sein. Unter dem Begriff Energy Harvesting Modul ist eine generatorisch arbeitende Vorrichtung zu verstehen, welche in das Fahrwerkbauteil integriert ist, und beispielsweise aufgrund auftretender Vibrationen im Fahrwerkbauteil Strom erzeugt.

Bevorzugt befinden sich die zumindest zwei Schaltelemente bei einer unterhalb des Belastungsgrenzwertes liegenden Biegebelastung in einer geschlossenen Schaltstellung. Der Stromkreis der elektrischen Schaltung bleibt somit dauerhaft geschlossen, bis die Verformung des Lasteinleitungselementes zu einer Änderung der Schaltstellung der zumindest zwei Schaltelemente führt. Dies hat den Vorteil, dass die Funktionalität der Schaltung und der damit verbundenen Überwachung des Fahrwerkbauteils permanent überwacht wird.

So kann die von dem zumindest einen Lasteinleitungselement aufgenommene Biegebelastung zu einer Absetzbewegung wenigstens eines der zumindest zwei Schaltelemente voneinander führen, die den Schalter in eine offene Schaltstellung überführt. Dazu kann der Schalter eine im Wesentlichen U-förmige Kontur aufweisen. Das zumindest eine Lasteinleitungselement verbindet die beiden im Wesentlichen parallel zueinander verlaufenden Schaltelemente miteinander. Die von dem zumindest einen Lasteinleitungselement aufgenommene Biegebelastung bewirkt, dass die Schaltelemente durch die Absetzbewegung eine Abstandsänderung zueinander erfahren. Die Richtung der Absetzbewegung verläuft parallel zum Lasteinleitungselement. Dabei können die Schaltelemente, in Abhängigkeit von ihrer Kontur, aufeinander zu oder voneinander weg bewegbar sein. Bevorzugt weisen die Schaltelemente einen zumindest abschnittsweise gekrümmten Verlauf auf.

Gemäß einer bevorzugten Weiterbildung kann bei der U-förmigen Ausgestaltung des Schalters ein Verbindungselement dem Lasteinleitungselement gegenüberliegend zwischen den zwei Schaltelementen angeordnet sein, wobei die freien Enden der zwei Schaltelemente das Verbindungselement in geschlossener Schaltstellung berühren. Auch hier führt die von dem zumindest einen Lasteinleitungselement aufgenommene Biegebelastung zu einer Absetzbewegung wenigstens eines der zumindest zwei Schaltelemente voneinander, durch die der Schalter in eine offene Schaltstellung überführbar ist.

Alternativ kann eine durch die Biegebelastung hervorgerufene Verformung des zumindest einen Lasteinleitungselementes zu einer Verformung wenigstens eines der zumindest zwei Schaltelemente führen, die den Schalter in eine offene Schaltstellung überführt. Die Verformung der Schaltelemente führt zu einer räumlichen Beabstandung der zumindest zwei Schaltelemente zueinander, so dass ein in der geschlossenen Schaltstellung bestehender Kontakt der zumindest zwei Schaltelemente miteinander unterbrochen wird. Hierzu kann der Schalter eine im Wesentlichen ringförmig geschlossene, polygone Kontur aufweisen. Zwischen zwei zueinander parallel verlaufenden, als Lasteinleitungselemente ausgebildeten, Abschnitten des Sensors befinden sich die zumindest zwei elastischeren Schaltelemente, die parallel zu den Lasteinleitungselementen verlaufend angeordnet sind. Die zwei Schaltelemente können miteinander mit ihren freien Enden in Abhängigkeit von der Schaltstellung in Kontakt stehen, so dass der Stromkreis der elektrischen Schaltung geschlossen ist.

Vorteilhafterweise kann die Einstellung des Belastungsgrenzwertes von der Dimensionierung des zumindest einen Lasteinleitungselementes abhängig sein. Das Lasteinleitungselement kann in seiner Dimensionierung individuell an eine maximal zulässige Biegebelastung angepasst werde, die in das jeweilige Fahrwerkbauteil eingeleitet werden darf. Dabei kann durch die Dimensionierung des Lasteinleitungselementes auch der Ort der Anordnung des zumindest einen Sensors an dem jeweiligen Fahrwerkbauteil Berücksichtigung finden. Je nach Ausgestaltung des Fahrwerkbauteils sowie der Positionierung des Sensors verändert sich die Verformungscharakteristik bzw. der Verlauf der Biegebelastung. Die Dimensionierung des zumindest einen Lasteinleitungselementes kann die Materialstärke betreffen und/oder die Steifigkeit des verwendeten Materials für das Lasteinleitungselement.

Des Weiteren kann die Einstellung des Belastungsgrenzwertes von der Dimensionierung und/oder Formgebung der zumindest zwei Schaltelemente abhängig sein. Insbesondere wenn eine durch die Biegebelastung hervorgerufene Verformung des zumindest einen Lasteinleitungselementes zu einer Verformung wenigstens eines der zumindest zwei Schaltelemente führt, lassen sich durch die Dimensionierung und/oder Formgebung der zumindest zwei Schaltelemente unterschiedliche Ansprechverhalten für Biegebelastungen realisieren. Führt die von dem zumindest einen Lasteinleitungselement aufgenommene Biegebelastung zu einer Absetzbewegung wenigstens eines der zumindest zwei Schaltelemente voneinander, lässt sich diese durch die Dimensionierung und/oder Formgebung der zumindest zwei Schaltelemente steuern, indem es bei geringen Biegebelastungen zu einem Abgleiten der Schaltelemente kommt, ohne dass diese den leitenden Kontakt zueinander verlieren. Durch eine frei zu wählende Dimensionierung der Materialstärke der Schaltelemente kann somit für unterschiedliche Biegebelastungen jeweils eine Öffnungslast individuell an das jeweilige Fahrwerkbauteil angepasst eingestellt werden.

Bevorzugt kann der Schalter aus einem spritzgussfähigen oder 3D-druckfähigen Kunststoff bestehen. Vorzugsweise kann als spritzgussfähiger Kunststoff Polyamid oder Polypropylen verwendet werden. Auf diese Weise kann der Schalter kostengünstig in hoher Stückzahl gefertigt werden. Alternativ kann der Schalter auch mittels eines 3D-Druck-Verfahrens hergestellt werden.

Gemäß einer bevorzugten Weiterbildung kann an den zumindest zwei Schaltelementen jeweils ein elektrisch leitender Kontaktabschnitt vorgesehen sein. Diese Kontaktabschnitte können in geschlossenen Schaltstellung des Schalters unmittelbar miteinander in Berührung stehen, so dass der Stromkreis geschlossen ist. Alternativ können diese Kontaktabschnitte in geschlossenen Schaltstellung des Schalters mittelbar durch das Fahrwerkbauteil miteinander verbunden sein. Kommt es aufgrund einer von dem zumindest einen Lasteinleitungselement aufgenommene Biegebelastung zu einer Absetzbewegung wenigstens eines der zumindest zwei Schaltelemente voneinander, so wird die Berührung der Kontaktabschnitte unterbrochen. Die Kontaktabschnitte können ihrerseits durch Leitungen in den Stromkreis der elektrischen Schaltung eingebunden sein. Die Kontaktabschnitte können dazu als Anlageflächen der Schaltelemente ausgeführt sein.

Alternativ können die zumindest zwei Schaltelemente und/oder das zumindest eine Lasteinleitungselement elektrisch leitend ausgeführt sein.

Gemäß einer weiteren Ausführungsform können in das Fahrwerkbauteil Kontaktelemente eingelassen sein, mit denen die Schaltelemente in geschlossener Schaltstellung in Kontakt stehen.

Insbesondere können mehrere Schalter in Reihe geschaltet an dem Fahrwerkbauteil angeordnet sein. Dabei kann die Dimensionierung des zumindest einen Lasteinleitungselementes und der zumindest zwei Schaltelemente des jeweiligen Sensors in Abhängigkeit von der Positionierung an dem Fahrwerkbauteil variieren. Für jeden einzelnen Schalter kann die Verformungscharakteristik an dem Fahrwerkbauteil individuell bestimmt werden. Hieraus lässt sich die Anzahl, der Ort und die Geometrie der als Sensoren zu verwendenden Schalter direkt ableiten, um ein Überschreiten der zulässigen Biegebelastung an jedem Punkt des Fahrwerkbauteils zuverlässig detektieren zu können.

Hierzu können die einzelnen Schalter in Abhängigkeit von ihrer Positionierung an dem Fahrwerkbauteil unterschiedliche Schaltcharakteristika aufweisen. Hierdurch kann bei einer vorgegeben, maximal zulässigen Größenordnung einer die Verformung des Fahrwerkbauteils hervorrufenden Kraft, über die Länge des Fahrwerkbauteils ein gleiches Ansprechverhalten der einzelnen Sensoren respektive Schalter gewährleistet werden.

Vorzugsweise kann der zumindest eine als Schalter ausgeführte Sensor kraft-, form- und/oder stoffschlüssig an dem Fahrwerkbauteil angeordnet sein. Die Montage kann beispielsweise durch Klipsen, Kleben oder dergleichen erfolgen. Dabei kann die Anordnung an einer Außenfläche des Fahrwerkbauteils erfolgen. Bevorzugt sollte der zumindest eine Schalter abgedeckt werden, um diesen vor äußeren Einflüssen wie Verschmutzung oder dergleichen zu schützen.

Alternativ kann der zumindest eine als Schalter ausgeführte Sensor in das Fahrwerkbauteil integriert sein. Hierdurch wird eine gegenüber Umgebungseinflüssen geschützte Anordnung des zumindest einen Schalters ohne zusätzlichen Aufwand erreicht.

Bevorzugt ist das, insbesondere faserverstärkte Fahrwerkbauteil als ein Mehrpunktlenker ausgeführt. Insbesondere kann das Fahrwerkbauteil als Zweipunktlenker, Dreipunktlenker, Vierpunktlenker oder Fünfpunktlenker ausgebildet sein. Den Mehrpunktlenkern ist gemeinsam, dass diese zumindest einen länglichen, strebenförmigen Verbindungsabschnitt aufweisen, der zumindest zwei Lasteinleitungsbereiche miteinander mittelbar oder unmittelbar verbindet.

Vorteilhafte Ausführungsformen der Erfindung, die nachfolgend erläutert werden, sind in den Zeichnungen dargestellt. Es zeigt:
- Fig. 1: in einer perspektivischen Ansicht von schräg oben einen Teil eines Fahrwerks mit einem als Achsstrebe ausgebildeten Fahrwerkbauteil;
- Fig. 2: eine schematische Ansicht des als Achsstrebe ausgeführten Fahrwerkbauteils mit daran angeordneten Sensoren;
- Fig. 3: eine schematische Darstellung eines als Schalter ausgeführten Sensors gemäß Fig. 2 in geschlossener Schaltstellung;
- Fig. 4: eine schematische Darstellung einer elektrischen Schaltung, in welche der als Schalter ausgeführte Sensor eingebunden ist;
- Fig. 5: eine perspektivische Darstellung des Schalters gemäß Fig. 3 in geöffneter Schaltstellung;
- Fig. 6: eine schematische Ansicht des als Achsstrebe ausgeführten Fahrwerkbauteils mit einem daran angeordneten Schalter gemäß einer zweiten Ausführungsform;
- Fig. 7: eine schematische Darstellung des Schalters gemäß Fig. 6 in geschlossener Schaltstellung; und
- Fig. 8: eine schematische Darstellung eines als Sensor ausgeführten Schalters gemäß einer dritten Ausführungsform.

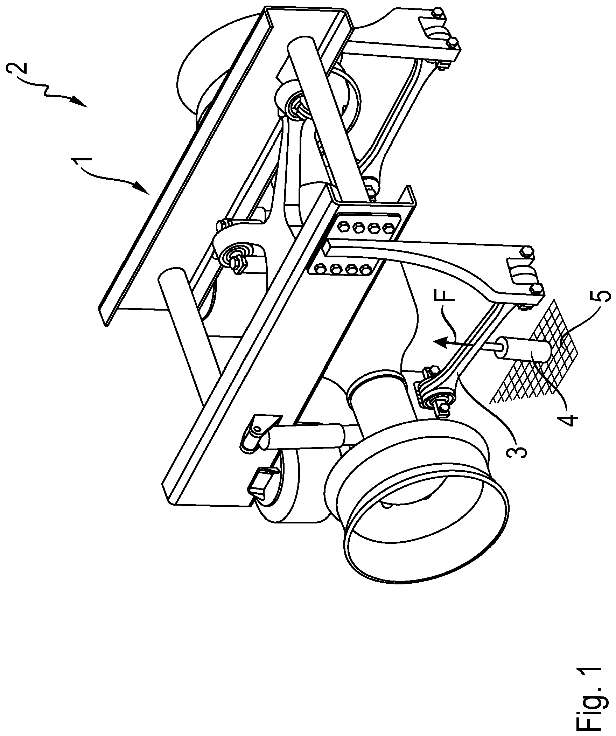

In Fig. 1 ist beispielhaft ein Teil eines Fahrwerks 1 eines Kraftfahrzeugs 2 dargestellt, wobei das Kraftfahrzeug 2 beispielhaft als ein Lastkraftwagen ausgebildet ist. Das Kraftfahrzeug kann auch als Personenkraftwagen ausgeführt sein. Das Fahrwerk 1 weist ein als Achsstrebe ausgebildetes, insbesondere faserverstärktes, Fahrwerkbauteil 3 auf. Das Fahrwerkbauteil 3 kann auch aus einem metallischen Werkstoff bestehen. Ein Wagenheber 4, der sich auf einem als Parkplatzfläche 5 ausgebildeten Untergrund abstützt, drückt gegen die Unterseite des für ein seitliches Anheben des Fahrwerks 1 nicht vorgesehenes und auch nicht ausgelegtes Fahrwerkbauteil 3. Dabei wird das Fahrwerkbauteil 3 mit einer Kraft F beaufschlagt, die zu einer Schädigung des Fahrwerkbauteils 3 führt, derart, dass eine Weiterfahrt des Kraftfahrzeugs 2 ein Sicherheitsrisiko darstellen kann. Neben diesem beispielhaften Missbrauchsfall wirken im laufenden Betrieb des Kraftfahrzeugs 2 Kräfte auf das Fahrwerk 1 und seine Fahrwerkbauteile 3 ein, die während der Nutzungsdauer des Kraftfahrzeugs 2 zu einer Degradierung der Fahrwerkbauteile 3 führen. Diesen Umständen wird durch die konstruktive Dimensionierung des Fahrwerkbauteils 3 Rechnung getragen, indem Fahrwerkbauteile 3 überdimensioniert ausgeführt werden. Dies läuft insbesondere dem Leichtbaugedanken zuwider, welcher der Ausgestaltung von Fahrwerkbauteilen als faserverstärkte Fahrwerkbauteile 3 aus einem Faserverbundwerkstoff zugrunde liegt.

Zur Vermeidung einer Überdimensionierung des Fahrwerkbauteils 3, bei gleichzeitiger Gewährleistung der Stabilität und Sicherheit des Fahrwerkbauteils 3 im laufenden Betrieb, ist es notwendig, das Auftreten von mechanischen Belastungen detektieren und auswerten zu können. Anhand der Auswertung der im Betrieb aufgetretenen Belastungen lässt sich auf die zu erwartende Lebensdauer des Fahrwerkbauteils 3 schließen. Ebenso lässt sich eine die Betriebssicherheit gefährdende Überbelastung detektieren. So kann in dem Steuergerät beispielsweise eine Zählschleife hinterlegt werden, welche die Anzahl der Lastüberschreitungen im Sinne eines Lebensdauerzählers detektiert, um dann gegebenenfalls bei Überschreiten eines Zählerschwellwertes eine Weiterfahrt zu unterbinden.

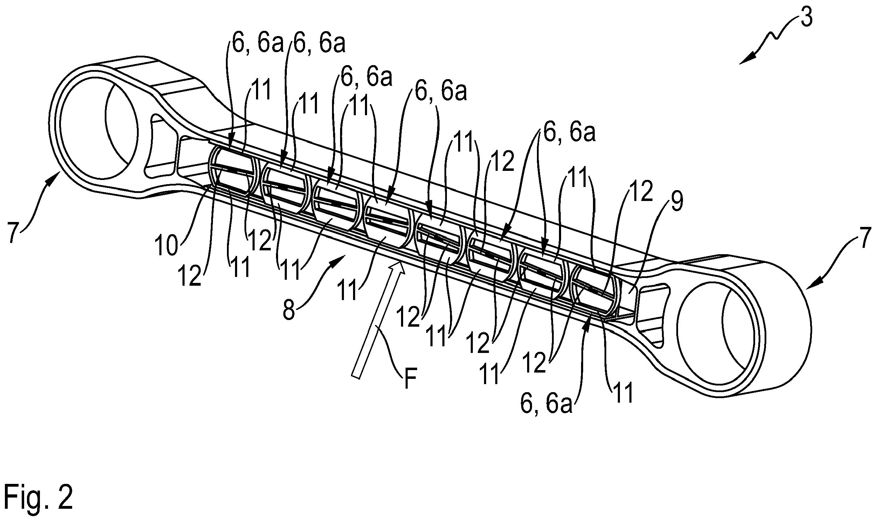

Um das Auftreten von Biegebelastungen an dem Fahrwerkbauteil 3 des Kraftfahrzeug 2 zu detektieren, ist an dem Fahrwerkbauteil 3 zumindest ein Sensor 6 zur Detektion einer mechanischen Belastung angeordnet, wie in Fig. 2 dargestellt ist.

Die Darstellung in Fig. 2 zeigt eine schematische Ansicht des als Achsstrebe ausgeführten Fahrwerkbauteils 3 mit mehreren daran angeordneten Sensoren 6. Das als Achsstrebe ausgeführte Fahrwerkbauteil 3 umfasst zwei Lasteinleitungsbereiche 7, die durch einen länglichen Verbindungsabschnitt 8 miteinander verbunden sind. Die Lasteinleitungsbereiche 7 dienen jeweils der Aufnahme zumindest eines Lagerbauteils. Der Verbindungsabschnitt 8 weist ein Tragprofil 9 auf. Das Tragprofil 9 kann einen Doppel-H-förmigen Querschnitt aufweisen, so dass sich auf beiden Seiten des Tragprofils 9 freiliegende Randbereiche 10 ausbilden, in denen mehrere Sensoren 6 in Reihe hintereinander angeordnet sind. Die Sensoren 6 sind dabei in Längsrichtung des Verbindungsabschnitts 8 verlaufend hintereinander angeordnet. Das Tragprofil 9 kann auch andere Querschnittsformen aufweisen, wobei das Tragprofil 9 als offenes Profil und/oder Hohlprofil ausgeführt sein kann.

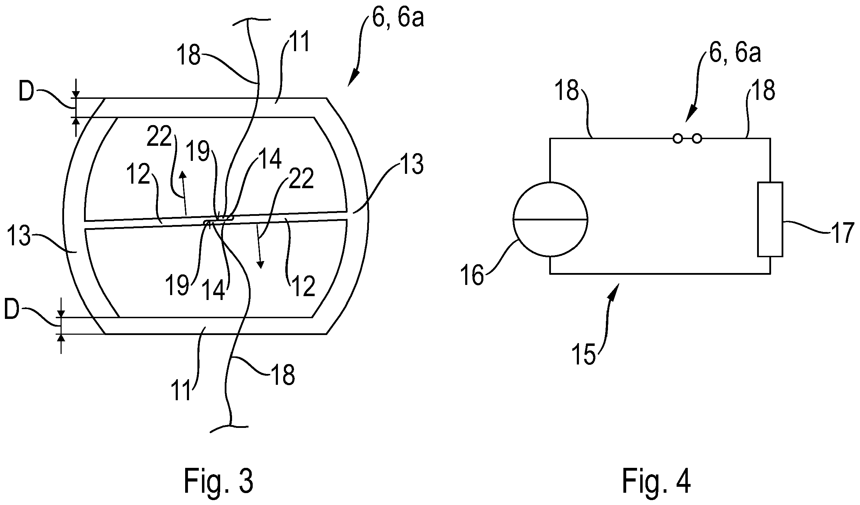

Der zumindest eine Sensor 6 ist als ein Schalter 6a mit zumindest einem Lasteinleitungselement 11 und zumindest zwei Schaltelementen 12 einer elektrischen Schaltung 15 ausgeführt. Im dargestellten Ausführungsbeispiel ist der Schalter 6a im Wesentlichen ringförmig geschlossen ausgeführt und weist eine polygone Kontur auf. Hierzu sind zwei Lasteinleitungselemente 11 einander parallel gegenüberliegend angeordnet und durch im Wesentlichen vertikal zu diesen verlaufende Schenkel 13 miteinander verbunden, wie aus Fig. 3 ersichtlich ist. An den Schenkeln 13 sind die zwei Schaltelemente 12 einander gegenüberliegend angeordnet.

Das zumindest eine Lasteinleitungselement 11 weist eine höhere Steifigkeit auf als die zumindest zwei Schaltelemente 12 auf. Die höhere Steifigkeit des zumindest einen Lasteinleitungselementes 11 gegenüber den zumindest zwei Schaltelementen 12 kann aus der Dimensionierung und/oder Materialauswahl resultieren.

Die Darstellung in Fig. 3 zeigt eine schematische Darstellung des als Schalter 6a ausgeführten Sensors 6 gemäß Fig. 2 in geschlossener Schaltstellung. Die einander gegenüberliegend angeordneten Schaltelemente 12 stehen an ihren freien Enden 14 durch Berührung in Kontakt miteinander. Die beiden Schaltelemente 12 sind elektrisch leitend mit einer in Fig. 4 stark vereinfacht dargestellten elektrischen Schaltung 15 verbunden. Die elektrisch leitende Verbindung ist durch Leitungen 18 lediglich beispielhaft veranschaulicht. Die Schaltelemente 12 können aus einem elektrisch leitenden Material bestehen oder zumindest im Bereich ihrer einander zugewandten Anlageflächen 19 an den freien Enden 14 mit einem elektrisch leitfähigen Material versehen sein. Die Anlageflächen 19 bilden elektrisch leitende Kontaktabschnitte des Schalters 6a, die unmittelbar miteinander in Kontakt stehen können.

In Fig. 4 ist eine schematische Darstellung einer elektrischen Schaltung 15, in welche der als Schalter 6a ausgeführte Sensor 6 eingebunden ist, gezeigt. Die Schaltung 15 umfasst eine Stromquelle 16 die durch Leitungen 18 mit einem zumindest einem Verbrauch 17 verbunden ist. Die Verbindung zwischen der Stromquelle 16 und dem Verbraucher 17 ist durch den Schalter 6a unterbrechbar. Der Verbraucher 17 kann beispielsweise als eine Signalleuchte und/oder als ein Steuergerät des Kraftfahrzeugs ausgeführt sein.

Die Darstellung in Fig. 4 zeigt den Schalter 6a in seiner geschlossenen Schaltstellung, was mit der Darstellung des Schalters 6a in Fig. 3 korrespondiert. Dabei kann die Stromquelle 16 als eine externe, am Fahrzeug angeordnete, Stromquelle ausgeführt sein. Alternativ kann die Stromquelle 16 als eine in das Fahrwerkbauteil 3 integrierte Stromquelle ausgeführt sein. Insbesondere bei einer in das Fahrwerkbauteil 3 integrierten Stromquelle kann diese als sogenanntes Energy Harvesting Modul ausgeführt sein. Aus der Darstellung ist ersichtlich, dass der für Realisierung der Überwachung notwendige Aufwand an Bauteilen auf ein Minimum begrenzt ist.

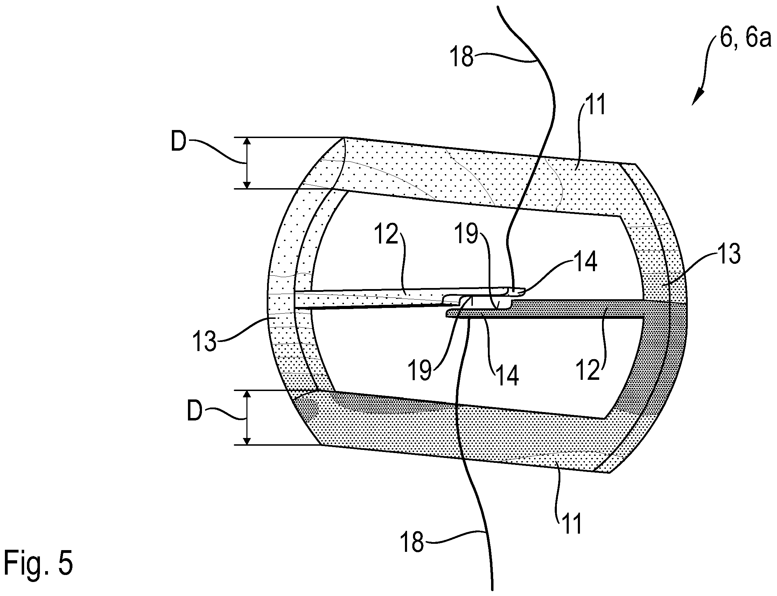

In Fig. 5 ist eine perspektivische Darstellung des Schalters 6a gemäß Fig. 3 in geöffneter Schaltstellung gezeigt. Die in das Fahrwerkbauteil 3 eingeleitete äußere Kraft F, beispielsweise hervorgerufen durch den Wagenheber 4, erzeugt eine Biegebelastung im Fahrwerkbauteil 3. Die Biegebelastung führt zu einer Verformung des Fahrwerkbauteils 3 in Form einer Durchbiegung, welche auf die Lasteinleitungselemente 11 übertragen wird und zu deren Verformung führt. Die Überschreitung eines Belastungsgrenzwert durch die von den Lasteinleitungselementen 11 aufgenommene Biegebelastung bewirkt eine Änderung der Schaltstellung der zumindest zwei Schaltelemente 12. Die Verformung der Lasteinleitungselemente 11 führt dazu, dass die beiden Schaltelemente 12 ebenfalls verformt werden. Bei einer Durchbiegung des Fahrwerkbauteils 3 biegen sich die beiden innenliegenden Schaltelemente 12, wodurch sie sich belastungslastabhängig zunehmend voneinander entfernen (angedeutet durch Pfeile 22). Erst bei einer bestimmten, durch eine Dimensionierung der Materialstärke des Schalters 6a, d.h. der Lasteinleitungselemente 11 und/oder der Schaltelemente 12, voreingestellten Größenordnung der Biegebelastung, öffnet sich die Kontaktstelle. Es lösen sich die miteinander in Berührung stehenden Anlageflächen 19 der freien Enden 14 der Schaltelemente 12 voneinander, wodurch der Schaltkreis der Schaltung 15 unterbrochen wird. Der Schalter 6a ist hinsichtlich seiner Dimensionierung und seiner Geometrie dergestalt ausgeführt, dass bei geringen Biegebelastungen ein Abgleiten der Anlageflächen 19 vorliegt und sich erst bei einem Überschreiten eines definierten Belastungsgrenzwertes der Kontakt unterbrochen wird.

Eine Verteilung mehrerer als Schalter 6a ausgeführter Sensoren 6 entlang des Verbindungsabschnittes 8 des Fahrwerkbauteils 3, wie in Fig. 2 beispielhaft dargestellt, ermöglicht es, die Einleitung einer senkrecht zur Längsachse des Fahrwerkbauteils 3 wirkenden Kraft F, wie durch das Ansetzten eines Wagenhebers an dem als Achsstrebe ausgeführten Fahrwerkbauteil 3, zuverlässig über die gesamte Länge des Fahrwerkbauteils 3 zu detektieren.

Dabei können die einzelnen Schalter 6a mit unterschiedlicher Dimensionierung und Steifigkeitscharakteristik der Lasteinleitungselemente 11 und der Schaltelemente 12 ausgelegt werden, um der unterschiedlichen Verformungscharakteristik in den verschiedenen Bereichen des Fahrwerkbauteils 3 Rechnung zu tragen. Eine in unmittelbarer Nähe der Lasteinleitungsbereiche 7 des als Achsstrebe ausgeführten Fahrwerkbauteils 3 eingeleitete Kraft F führt zu einer anderen Verformungscharakteristik als eine Einleitung der Kraft F gleicher Größenordnung im Bereich der Mitte des Fahrwerkbauteils 3. Für jeden Schalter 6a kann die Verformungscharakteristik rechnerisch ermittelt werden. Hieraus lässt sich die Anzahl, der Ort und die Geometrie der zu verwendenden Schalter 6a direkt ableiten, um die durch die an dem Fahrwerkbauteil 3 angreifende Kraft F an jedem Punkt des Fahrwerkbauteils 3 sicher detektieren zu können.

Die als Schalter 6a ausgeführten Sensoren 6 können kostengünstig und in hoher Stückzahl aus einem einfachen Spritzgussmaterial wie Polyamid (PA) oder Polypropylen (PP) hergestellt werden, da die Schalter 6a nur sehr geringe Lasten aufnehmen müssen. Bei einem als Achsstrebe ausgeführten Fahrwerkbauteil 3 können mehrere Schalter 6a unterschiedlicher Dimensionierung zusammenhängend als eine Leiste ausgeführt sein, die an oder in dem Fahrwerkbauteil 3 angeordnet wird. Die Montage dieser mehrere Schalter 6a umfassenden Leiste kann durch Klipsen, Kleben, etc. an dem Fahrwerkbauteil 3 erfolgen. Zum Schutz der Schalter 6a kann diese Leiste auch in das Fahrwerkbauteil 3 integriert werden. Alternativ ist die Herstellung des Sensors 6 auch mittels eines 3D-Druck-Verfahrens möglich.

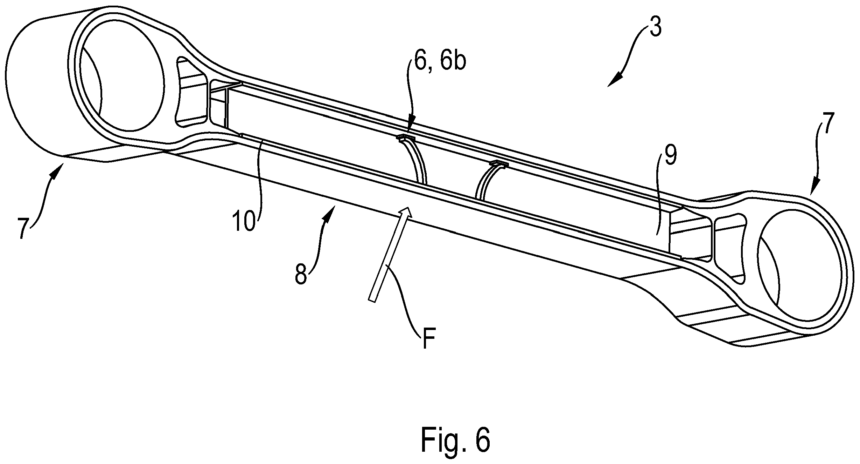

In Fig. 6 ist eine schematische Ansicht des als Achsstrebe ausgeführten Fahrwerkbauteils 3 mit einem daran angeordneten, als Schalter 6b ausgeführten Sensor 6, gemäß einer zweiten Ausführungsform dargestellt. Die Darstellung zeigt lediglich beispielhaft nur einen Sensor 6, der an dem Tragprofil 9 des Fahrwerkbauteil 3 angeordnet ist. Wie weiter oben ausgeführt wurde, ist die Anordnung mehrerer der Sensoren 6 in Reihe hintereinander in Längsrichtung des Verbindungsabschnitt 8 sinnvoll, um über die gesamte Länge eine Überlast mit hoher Genauigkeit detektieren zu können.

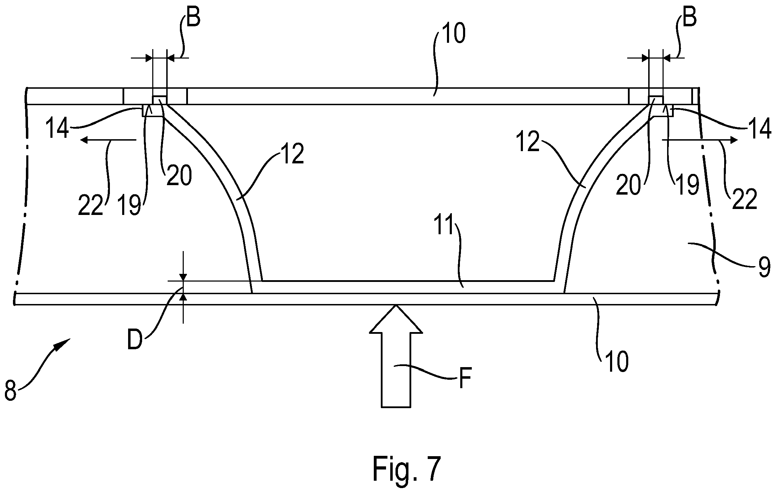

In Fig. 7 ist eine schematische Darstellung des Schalters 6b gemäß Fig. 6 im Detail in geschlossener Schaltstellung gezeigt. Der Schalter 6b ist im Wesentlichen U-förmig ausgeführt. Der Schalter 6b weist nur ein Lasteinleitungselement 11 auf, welches die beiden im Wesentlichen parallel zueinander angeordneten Schaltelemente 12 miteinander verbindet. Das Lasteinleitungselement 11 liegt an dem Tragprofil 9 flächig an. Die freien Enden 14 der Schaltelemente 12 liegen an einem gegenüberliegenden Abschnitt des Tragprofils 9 an. Die spiegelbildlich angeordneten Schaltelemente 12 weisen einen gekrümmten Verlauf, wobei der Abstand zwischen ihren freien Enden 14 von der axialen Erstreckung des Lasteinleitungselementes 11 abweicht. Im dargestellten Ausführungsbeispiel ist der Abstand der freien Enden 14 zueinander größer als die axiale Erstreckung des Lasteinleitungselementes 11 zwischen den Schaltelementen 12. Die Krümmung der Schaltelemente 12, konkav oder konvex, gibt die Richtung vor, in welcher die Schaltelemente 12 aufgrund der Verformung abgleiten. Im Bereich der dem Tragprofil 9 zugewandten Anlageflächen 19 der Schaltelemente 12 sind in die Oberfläche des Tragprofils 9 Kontaktelemente 20 eingelassen oder angeordnet, welche mit an den Anlageflächen 19 befindlichen Kontaktelementen 20 in geschlossener Schaltstellung des Schalters 6b leitend in Verbindung stehen. Die an den zumindest zwei Schaltelementen 12 jeweils als elektrisch leitenden Kontaktabschnitte ausgeführten Anlageflächen 19 stehen mittelbar durch das Tragprofil 9 elektrisch leitend miteinander in Verbindung. Alternativ kann der Schalter 6b aus einem elektrisch leitfähigen Material bestehen oder mit zumindest partiell mit einem elektrisch leitfähigen Material versehen sein.

Bei einer Durchbiegung des Fahrwerkbauteils gleiten die beiden Schaltelemente 12 auf der Oberfläche des Tragprofils 9 seitlich in Richtung der Pfeile 22 ab. Ist ein Belastungsgrenzwert für die Biegebelastung überschritten, führt die von dem Fahrwerkbauteil 3 über das Lasteinleitungselement 11 auf die Schaltelemente 12 übertragene Verformung dazu, dass verlieren die Schaltelemente 12 den Kontakt zu den in der der Oberfläche des Tragprofils 9 eingelassenen oder angeordneten Kontaktelementen 20, wodurch der Signalfluss unterbrochen wird. Durch eine entsprechende Dimensionierung einer Breite B der Kontaktelemente 20 sowie der Form und Stärke der Schaltelemente 12 kann dieser Schalter für unterschiedlichste Kräfte genutzt werden.

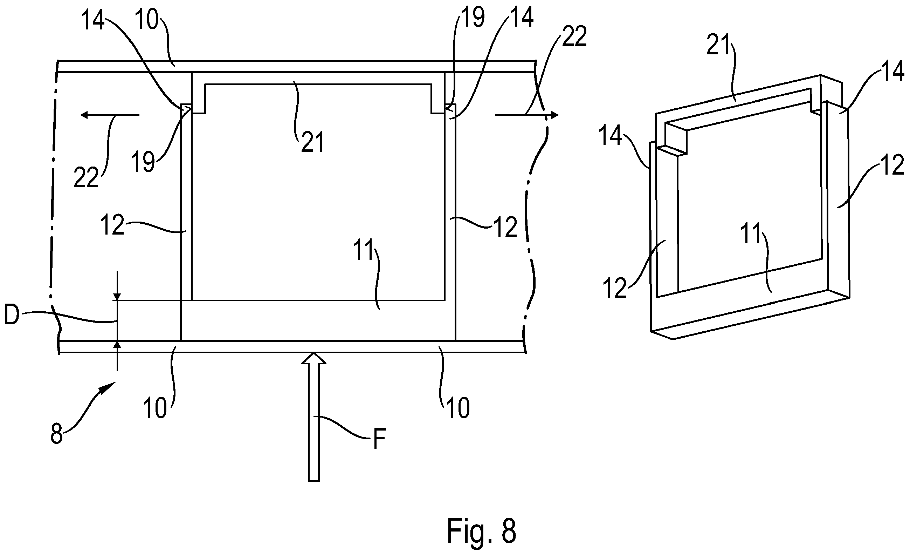

Fig. 8 zeigt eine schematische Darstellung eines als Sensor 6 ausgeführten Schalters 6c gemäß einer dritten Ausführungsform in Frontalansicht und perspektivischer Ansicht. Der Schalter 6c weist ebenfalls eine U-förmige Kontur auf. Der Schalter 6c weist nur ein Lasteinleitungselement 11 auf, welches die zwei parallel zueinander angeordneten Schaltelemente 12 miteinander verbindet. Die Schaltelemente 12 weisen einen geraden Verlauf auf.

Dem Lasteinleitungselement 11 gegenüberliegend ist zwischen den zwei Schaltelementen 12 ein Verbindungselement 21 angeordnet. Die freien Enden 14 der beiden

Schaltelemente 12 berühren mit ihren Anlageflächen 19 das Verbindungselement 21 in geschlossener Schaltstellung des Schalters 6c, so dass der Schaltkreis geschlossen ist. Hierzu können die Anlageflächen 19 der freien Enden 14 die elektrisch leitenden Kontaktabschnitte bilden. In das Verbindungselement 21 sind elektrisch leitende Kontaktelemente 20 eingearbeitet. Auch hierbei sind die Schaltelemente 12 mittelbar durch das Verbindungselement 21 elektrisch leitend miteinander verbunden. Alternativ kann der Schalter 6c selbst als leitendes Bauteil ausgeführt sein. Die aus Kunststoff bestehenden elastischen Schaltelemente 12 können eine mechanische Vorspannung aufweisen, um den Kontakt in geschlossener Schaltstellung des Schalters 6c zu gewährleisten.

Auch hier führt die von dem zumindest einen Lasteinleitungselement 11 aufgenommene Biegebelastung aufgrund der äußeren Kraft F zu einer Absetzbewegung wenigstens eines der zumindest zwei Schaltelemente 12 voneinander, durch die der Schalter 6c in eine offene Schaltstellung überführbar ist. Die durch die Kraft F hervorgerufene Verformung des Fahrwerkbauteils 3 überträgt sich auf das Lasteinleitungselement 11, so dass sich beide Schaltelemente 12 nach außen wegbiegen (Pfeil 22) und dadurch den Kontakt zu dem Verbindungselement 21 verlieren.

Die Dimensionierung zur Einstellung des Ansprechverhaltens des Schalters 6c erfolgt über die jeweils gewählte Materialstärke D des Lasteinleitungselementes 11, d.h. die Erstreckung des Lasteinleitungselementes 11 quer zur Längsrichtung des Fahrwerkbauteils 3. Je nach gewählter Materialstärke D des Lasteinleitungselementes 11 biegen sich die Schaltelemente 12 bei gleicher Größenordnung der äußeren Kraft F unterschiedlich stark auseinander. Entsprechend lässt sich auch durch diese Ausführungsform des Sensors 6 dieser an die Verformungscharakteristik des Fahrwerkbauteils 3 anpassen. Wie zuvor auch bereits ausgeführt, erfolgt eine Anordnung von an die Verformungscharakteristik des Fahrwerkbauteils 3 angepassten Schaltern 6c in Reihe hintereinander.

### Bezugszeichen

- 1: Fahrwerk
- 2: Fahrzeug
- 3: Fahrwerkbauteil
- 4: Wagenheber
- 5: Parkplatzfläche
- 6: Sensor
- 6a: Schalter
- 6b: Schalter
- 6c: Schalter
- 7: Lasteinleitungsbereich
- 8: Verbindungsabschnitt
- 9: Tragprofil
- 10: Randbereich
- 11: Lasteinleitungselement
- 12: Schaltelement
- 13: Schenkel
- 14: Freies Ende von 12
- 15: Schaltung
- 16: Stromquelle
- 17: Verbraucher
- 18: Leitung
- 19: Anlagefläche
- 20: Kontaktelement
- 21: Verbindungselement
- 22: Pfeil
- B: Breite
- D: Materialstärke
- F: Kraft

## Patentansprüche

1. Fahrwerkbauteil (3) für ein Kraftfahrzeug (1), an dem zumindest ein Sensor (6) zur Detektion einer mechanischen Belastung (F) angeordnet ist, **dadurch gekennzeichnet, dass** der zumindest eine Sensor (6) als ein Schalter (6a, 6b, 6c) einer elektrischen Schaltung (15) ausgeführt ist, mit zumindest einem Lasteinleitungselement (11) und zumindest zwei Schaltelementen (12), wobei das Lasteinleitungselement (11) eine höhere Steifigkeit als die zumindest zwei Schaltelemente (12) aufweist, wobei eine Überschreitung eines Belastungsgrenzwertes durch eine von dem zumindest einen Lasteinleitungselement (11) über das Fahrwerkbauteil (3) aufgenommene Biegebelastung eine Änderung einer Schaltstellung der zumindest zwei Schaltelemente (12) bewirkt.

2. Fahrwerkbauteil (3) nach Anspruch 1, **dadurch gekennzeichnet, dass** die Schaltung (15) eine Stromquelle (16) umfasst, die als externe Stromquelle oder als eine in das Fahrwerkbauteil (3) integrierte Stromquelle ausgeführt ist.

3. Fahrwerkbauteil (3) nach Anspruch 1 oder 2, **dadurch gekennzeichnet, dass** sich der Schalter (6a, 6b, 6c) bei einer unterhalb des Belastungsgrenzwertes liegenden Biegebelastung in einer geschlossenen Schaltstellung befindet.

4. Fahrwerkbauteil (3) nach einem der Ansprüche 1 bis 3, **dadurch gekennzeichnet, dass** die von dem zumindest einen Lasteinleitungselement (11) aufgenommene Biegebelastung zu einer Absetzbewegung wenigstens eines der zumindest zwei Schaltelemente (12) voneinander führt, die den Schalter (6a, 6b, 6c) in eine offene Schaltstellung überführt.

5. Fahrwerkbauteil (3) nach einem der Ansprüche 1 bis 3, **dadurch gekennzeichnet, dass** eine durch die Biegebelastung hervorgerufene Verformung des zumindest einen Lasteinleitungselementes (11) zu einer Verformung wenigstens eines der zumindest zwei Schaltelemente (12) führt, die den Schalter (6a, 6b, 6c) in eine offene Schaltstellung überführt.

6. Fahrwerkbauteil (3) nach einem der Ansprüche 1 bis 5, **dadurch gekennzeichnet, dass** die Einstellung des Belastungsgrenzwertes von der Dimensionierung des zumindest einen Lasteinleitungselementes (11) abhängig ist.

7. Fahrwerkbauteil (3) nach einem der Ansprüche 1 bis 6, **dadurch gekennzeichnet, dass** die Einstellung des Belastungsgrenzwertes von der Dimensionierung und/oder Formgebung der zumindest zwei Schaltelemente (12) abhängig ist.

8. Fahrwerkbauteil (3) nach einem der Ansprüche 1 bis 7, **dadurch gekennzeichnet, dass** der Schalter (6a, 6b, 6c) aus einem spritzgussfähigen oder einem 3D-druckfähigen Kunststoff besteht.

9. Fahrwerkbauteil (3) nach einem der Ansprüche 1 bis 8, **dadurch gekennzeichnet, dass** an den zumindest zwei Schaltelementen (12) jeweils ein elektrisch leitender Kontaktabschnitt (19) vorgesehen ist.

10. Fahrwerkbauteil (3) nach einem der Ansprüche 1 bis 8, **dadurch gekennzeichnet, dass** die zumindest zwei Schaltelemente (12) und/oder das zumindest eine Lasteinleitungselement (11) elektrisch leitend ausgeführt sind.

11. Fahrwerkbauteil (3) nach einem der Ansprüche 1 bis 10, **dadurch gekennzeichnet, dass** in das Fahrwerkbauteil (3) Kontaktelemente (20) eingelassen sind, mit denen die Schaltelemente (12) in geschlossener Schaltstellung in Kontakt stehen.

12. Fahrwerkbauteil (3) nach einem der Ansprüche 1 bis 11, **dadurch gekennzeichnet, dass** mehrere Schalter (6a, 6b, 6c) in Reihe geschaltet an dem Fahrwerkbauteil (3) angeordnet sind.

13. Fahrwerkbauteil (3) nach Anspruch 12, **dadurch gekennzeichnet, dass** die einzelnen Schalter (6a, 6b, 6c) in Abhängigkeit von ihrer Positionierung an dem Fahrwerkbauteil (3) unterschiedliche Schaltcharakteristika aufweisen.

14. Fahrwerkbauteil (3) nach einem der Ansprüche 1 bis 13, **dadurch gekennzeichnet, dass** der zumindest eine als Schalter (6a, 6b, 6c) ausgeführte Sensor (6) kraft-, form- und/oder stoffschlüssig an dem Fahrwerkbauteil (3) angeordnet ist.

15. Fahrwerkbauteil (3) nach einem der Ansprüche 1 bis 13, **dadurch gekennzeichnet, dass** der zumindest eine als Schalter (6a, 6b, 6c) ausgeführte Sensor (6) in das Fahrwerkbauteil (3) integriert ist.

## Claims

1. Chassis component (3) for a motor vehicle (1), on which at least one sensor (6) for detecting a mechanical load (F) is arranged, **characterized in that** the at least one sensor (6) is designed as a switch (6a, 6b, 6c) of an electric circuit (15), having at least one load introduction element (11) and at least two switching elements (12), wherein the load introduction element (11) has greater rigidity than the at least two switching elements (12), wherein overshooting of a load limit value by a bending load received by the at least one load introduction element (11) via the chassis component (3) causes a change in a switching position of the at least two switching elements (12).

2. Chassis component (3) according to Claim 1, **characterized in that** the circuit (15) comprises a power source (16) which is designed as an external power source or as a power source integrated into the chassis component (3).

3. Chassis component (3) according to Claim 1 or 2, **characterized in that** the switch (6a, 6b, 6c) is in a closed switching position when the bending load lies below the load limit value.

4. Chassis component (3) according to one of Claims 1 to 3, **characterized in that** the bending load received by the at least one load introduction element (11) leads to a movement away of at least one of the at least two switching elements (12), this movement away moving the switch (6a, 6b, 6c) to an open switching position.

5. Chassis component (3) according to one of Claims 1 to 3, **characterized in that** a deformation, caused by the bending load, of the at least one load introduction element (11) leads to a deformation of at least one of the at least two switching elements (12), this deformation moving the switch (6a, 6b, 6c) to an open position.

6. Chassis component (3) according to one of Claims 1 to 5, **characterized in that** the setting of the load limit value is dependent on the dimensions of the at least one load introduction element (11).

7. Chassis component (3) according to one of Claims 1 to 6, **characterized in that** the setting of the load limit value is dependent on the dimensions and/or shape of the at least two switching elements (12).

8. Chassis component (3) according to one of Claims 1 to 7, **characterized in that** the switch (6a, 6b, 6c) consists of an injection-mouldable or 3D-printable plastic.

9. Chassis component (3) according to one of Claims 1 to 8, **characterized in that** an electrically conductive contact section (19) is provided on each of the at least two switching elements (12).

10. Chassis component (3) according to one of Claims 1 to 8, **characterized in that** the at least two switching elements (12) and/or the at least one load introduction element (11) are/is electrically conductive.

11. Chassis component (3) according to one of Claims 1 to 10, **characterized in that** contact elements (20), by way of which the switching elements (12) are contact in the closed switching position, are incorporated into the chassis component (3).

12. Chassis component (3) according to one of Claims 1 to 11, **characterized in that** a plurality of switches (6a, 6b, 6c) are arranged on the chassis component (3) in a manner connected in series.

13. Chassis component (3) according to Claim 12, **characterized in that** the individual switches (6a, 6b, 6c) have different switching characteristics depending on their positioning on the chassis component (3).

14. Chassis component (3) according to one of Claims 1 to 13, **characterized in that** the at least one sensor (6), which is designed as a switch (6a, 6b, 6c), is arranged on the chassis component (3) in a non-positive, positive and/or cohesive manner.

15. Chassis component (3) according to one of Claims 1 to 13, **characterized in that** the at least one sensor (6), which is designed as a switch (6a, 6b, 6c), is integrated into the chassis component (3).

## Revendications

1. Composant de train roulant (3) pour un véhicule automobile (1), sur lequel est agencé au moins un capteur (6) pour la détection d'une charge mécanique (F), **caractérisé en ce que** ledit au moins un capteur (6) est réalisé sous la forme d'un commutateur (6a, 6b, 6c) d'un circuit électrique (15), avec au moins un élément d'application de charge (11) et au moins deux éléments de commutation (12), l'élément d'application de charge (11) présentant une rigidité plus élevée que les au moins deux éléments de commutation (12), un dépassement d'une valeur limite de charge par une charge de flexion absorbée par ledit au moins un élément d'application de charge (11) par l'intermédiaire du composant de train roulant (3) provoquant une modification d'une position de commutation des au moins deux éléments de commutation (12) .

2. Composant de train roulant (3) selon la revendication 1, **caractérisé en ce que** le circuit (15) comprend une source de courant (16) qui est réalisée sous la forme d'une source de courant externe ou sous la forme d'une source de courant intégrée dans le composant de train roulant (3).

3. Composant de train roulant (3) selon la revendication 1 ou la revendication 2, **caractérisé en ce que** le commutateur (6a, 6b, 6c) se trouve dans une position de commutation fermée lorsque la charge de flexion est inférieure à la valeur limite de charge.

4. Composant de train roulant (3) selon l'une des revendications 1 à 3, **caractérisé en ce que** la charge de flexion absorbée par ledit au moins un élément d'application de charge (11) entraîne un mouvement de retrait d'au moins l'un des au moins deux éléments de commutation (12) l'un de l'autre, qui fait passer le commutateur (6a, 6b, 6c) dans une position de commutation ouverte.

5. Composant de train roulant (3) selon l'une des revendications 1 à 3, **caractérisé en ce qu'**une déformation de l'au moins un élément d'application de charge (11) provoquée par la sollicitation en flexion conduit à une déformation d'au moins un desdits au moins deux éléments de commutation (12), qui fait passer le commutateur (6a, 6b, 6c) dans une position de commutation ouverte.

6. Composant de train roulant (3) selon l'une des revendications 1 à 5, **caractérisé en ce que** le réglage de la valeur limite de charge dépend du dimensionnement dudit au moins un élément d'application de charge (11).

7. Composant de train roulant (3) selon l'une des revendications 1 à 6, **caractérisé en ce que** le réglage de la valeur limite de charge dépend du dimensionnement et/ou de la forme des au moins deux éléments de commutation (12).

8. Composant de train roulant (3) selon l'une des revendications 1 à 7, **caractérisé en ce que** le commutateur (6a, 6b, 6c) est constitué d'une matière plastique apte à être moulée par injection ou imprimée en 3D.

9. Composant de train roulant (3) selon l'une des revendications 1 à 8, **caractérisé en ce qu'**une section de contact (19) électriquement conductrice est prévue sur chacun des au moins deux éléments de commutation (12).

10. Composant de train roulant (3) selon l'une des revendications 1 à 8, **caractérisé en ce que** lesdits au moins deux éléments de commutation (12) et/ou ledit au moins un élément d'application de charge (11) sont conçus de manière à être électriquement conducteurs.

11. Composant de train roulant (3) selon l'une des revendications 1 à 10, **caractérisé en ce que** des éléments de contact (20) sont encastrés dans le composant de train roulant (3), avec lesquels les éléments de commutation (12) sont en contact en position de commutation fermée.

12. Composant de train roulant (3) selon l'une des revendications 1 à 11, **caractérisé en ce que** plusieurs commutateurs (6a, 6b, 6c) sont montés en série sur le composant de train roulant (3).

13. Composant de train roulant (3) selon la revendication 12, **caractérisé en ce que** les différents interrupteurs (6a, 6b, 6c) présentent des caractéristiques de commutation différentes en fonction de leur positionnement sur le composant de train roulant (3) .

14. Composant de train roulant (3) selon l'une des revendications 1 à 13, **caractérisé en ce que** ledit au moins un capteur (6) réalisé sous forme de commutateur (6a, 6b, 6c) est agencé sur le composant de train roulant (3) par adhérence, par complémentarité de forme et/ou de matière.

15. Composant de train roulant (3) selon l'une des revendications 1 à 13, **caractérisé en ce que** ledit au moins un capteur (6) réalisé sous forme d'interrupteur (6a, 6b, 6c) est intégré dans le composant de train roulant (3).
